# EUROPÄISCHE PATENTANMELDUNG

(11) **EP 0 523 753 A1**
(43) Veröffentlichungstag der Anmeldung: **20.01.1993**
(21) Anmeldenummer: 92116225.1
(22) Anmeldetag: 14.09.1990
(51) Int. Cl.: E04B 1/343

(54) **Transportable zerlegbare Kabine**

(30) Priorität: 19.10.1989 DE 3934847
(62) Teilanmeldung aus: 90117696.6
(71) Anmelder: Müller, Harald Georg, D-65189 Wiesbaden (DE)
(72) Erfinder: Müller, Harald Georg, D-65189 Wiesbaden (DE)
(74) Vertreter: Weber, Dieter, Dr.

(57) **Zusammenfassung**

Die Erfindung betrifft eine transportable, zerlegbare Kabine, welche aus mehreren Wandsegmenten (1, 2, 3) und gegebenenfalls mindestens einem Decken- (5) und einem Bodensegment (4) besteht, welche zu einer im wesentlichen geschlossenen Kabine zusammensetzbar sind. Um eine Kabine zu schaffen, welche eine erheblich vereinfachte Herstellung und einen erheblich vereinfachten Zusammenbau der Kabine ermöglichen und dabei gleichzeitig einen stabilen und relativ verwindungssteifen Zusammenhalt sowie ein ansprechendes Äußeres der Kabine gewährleisten. Gleichzeitig soll die Kabine nach Möglichkeit auch leicht demontierbar und einfach transportierbar sein. Zur Lösung dieser Aufgabe wird erfindungsgemäß vorgeschlagen, daß auf der Innenseite der Wandsegmente (1, 2, 3) ein Formteil (4) angeordnet ist und daß die einzelnen Wandsegmente durch ein außen umlaufendes Spannband (20) zusammengehalten werden.

## Beschreibung

Die vorliegende Erfindung betrifft eine Kabine, welche aus mehreren Wandsegmenten und gegebenenfalls mindestens einem Decken- und einem Bodensegment besteht, welche zu einer im wesentlichen geschlossenen Kabine zusammensetzbar sind, nach dem Obergriff des Anspruch 1.

Aus mehreren Segmenten zusammensetzbare Kabinen, zum Beispiel ausgestaltet als transportable Toilettenkabinen für Chemietoiletten, die je nach Bedarf kurzfristig aufstellbar sind, sind bekannt. Diese bestehen im wesentlichen aus vier Wandplatten, einer Boden- und einer Deckenplatte, wobei diese Teile unter Bildung einer quaderförmigen Kabine miteinander vernietet werden.

Die Herstellung und auch der Zusammenbau derartiger Kabinen ist relativ aufwendig, da spezielle Werkzeuge, beispielsweise Nietwerkzeuge, benötigt werden. Die Segmente der bekannten Kabinen bestehen aus im wesentlichen ebenen Kunststoffplatten und sind deshalb in ihren Eckverbindungen nicht sehr verwindungssteif und stabil. Außerdem sind diese Kabinen nur unter Schwierigkeiten wieder zerlegbar, indem die einzelnen Nietverbindungen aufgebohrt werden. Im Regelfall bleiben diese Kabinen im zusammengebauten Zustand, nachdem sie einmal zusammengesetzt worden sind. Dies erhöht den Platzbedarf beim Transport zu wechselnden Einsatzorten.

Gegenüber diesem Stand der Technik liegt daher der Erfindung die Aufgabe zugrunde, eine Kabine mit den eingangs genannen Merkmalen sowie ein Verfahren zur Herstellung einer solchen Kabine zu schaffen, welche eine erheblich vereinfachte Herstellung und einen erheblich vereinfachten Zusammenbau der Kabine ermöglichen und dabei gleichzeitig einen stabilen und relativ verwindungssteifen Zusammenhalt sowie ein ansprechendes Äußeres der Kabine gewährleisten. Gleichzeitig soll die Kabine nach Möglichkeit auch leicht demontierbar und einfach transportierbar sein.

Hinsichtlich der Kabine welche aus mehreren Wandsegmenten und gegebenenfalls auch aus einem Decken- und einem Bodensegment besteht, welche zu einer im wesentlichen geschlossenen Kabine zusammensetzbar sind, wird die der Erfindung zugrundeliegende Aufgabe dadurch gelöst, daß auf der Innenseite der Wandsegmente ein Formteil angeordnet ist und daß die einzelnen Wandsegmente durch ein außen umlaufendes Spannband zusammengehalten werden.

Diese Art der Verbindung erlaubt eine äußerst schnelle Montage und Demontage der Kabinensegmente, die so im zusammengesetzten Zustand sicher zusammengehalten werden.

Zweckmäßig ist es,wenn die Wandsegmente außerdem nahe an ihrem oberen und/oder an ihrem unteren Rand je eine im wesentlichen horizontal verlaufende Vertiefung zur Aufnahme je eines Spannbandes aufweisen. Die Anordnung der Spannbänder am oberen und/oder unteren Rand der Kabine ist deshalb zweckmäßig, weil so der Durchgang durch eine Tür in der Kabinenwand durch das umlaufende Spannband nicht behindert wird. Gegebenenfalls reicht auch ein einziges oberes oder unteres Spannband aus, wenn beispielsweise am jeweils entgegengesetzten Rand der Kabine die Segmente durch ein Decken- bzw. Bodenelement zusammengehalten werden.

Vorzugsweise werden die miteinander verbundenen Wandteile als ein einstückiges, abgewinkeltes Wandsegment hergestellt, wobei mindestens ein Teil der Wandsegmente aus einem zumindest an seiner Außenseite im Grundriß im wesentlichen geraden ersten Wandteil und mindestens einem untereinem Winkelvon höchstens 90° hierzu abgewinkelten und mit dem ersten Wandteil fest verbundenen zweiten Wandteil besteht, wobei in vorteilhafter Weise die Kabine drei Wandsegmente aufweist, die aus je einem an der Außenseite im wesentlichenen ebenen ersten Wandteil sowie unter 60°° hierzu abgewinkelten zweiten Wandteilen besteht, welche je etwa die halbe Breite des ersten Wandteiles aufweisen, und wobei die zweiten Wandteile verschiedener Segmente vorzugsweise in einer Nut-Federverbindung aneinander-stoßen.

Diese abgewinkelte Gestaltung der einzelnen Wandsegmente, die zusammengesetzt die Außenwand einer Kabine ergeben, ermöglicht einen sehr schnellen und sicheren Zusammenbau, wobei man aufgrund der unter einem Winkel fest verbundenen Wandteile verschiedener Wandsegmente ein recht stabile und verwindungssteife Kabine erhält. Diese hat darüber hinaus den Vorteil, daß sie in ihre Segmente zerlegbar und damit leicht transportierbar ist.

Eine 60°-Abwinkelung der Wandteile jedes Wandsegmentes trägt erheblich zur Stabilisierung der einzelnen Wandsegmente und damit auch der gesamten Kabine bei. Wie man sich leicht überlegen kann, kann eine Kabine, die ausschließlich aus drei Wandsegmenten besteht, unter Bildung einer Kabine mit dem Grundriß eines regelmäßigen Sechsecks mit ihren zweiten Seitenteilen aneinandergesetzt werden. Dabei fluchten die zweiten Seitenteile aneinanderstoßender Wandsegmente miteinander. Die regelmäßige Sechseckform ergibt sich dann zwingend aus den zwischenden ersten und zweiten Wandteilen eingeschlossenen Winkeln von jeweils 60° und aus der Tatsache, daß die beiden aneinanderstoßenden Seitenteile benachbarter Wandsegmente miteinander fluchten und jeweils die halbe Seitenlänge eines ersten Wandteiles haben. Durch das Aneinandersetzen der kurzen Wandteile werden die einzelnen Wandsegmente gegeneinander fixiert.

Die Herstellung der Segmente als Hohlblasteile trägt zu einer enormen Beschleunigung des Produktionsverfahrens bei, wobei der konstruktive Aufbau als Hohlblasteil eine ganze Reihe weiterer Vorteile mit sich bringt. Die Hohlblasteile lassen sich relativ formstabil herstellen und wirken als doppelwandige Teile gleichermaßen wärme- wie schallisolierend.

Unter "Hohlblasen" versteht man dabei ein Herstellungsverfahren, bei welchem ein mehr oder weniger großer "Tropfen" oder Klumpen aus einem fließfähigen Kunststoffmaterial an einer Düsenöffnung angeordnet, in einen Hohlraum mit der gewünschten Negativform eingebracht und von Innen her aufgeblasen wird, so daß sich das Kunststoffmaterial von der Innenseite her an die Wände der Form anlegt. Dabei können, insbesondere bei größeren Formteilen, auch mehrere "Tropfen" in eine Form eingebracht werden, die nach dem Aufblasen ein einstückig zusammenhängendes Formte mit mehreren getrennten Hohlräumen bilden.

Es sind bereits andere Kabinen aus Kunststoff bekannt, deren Wände jedoch im allgemeinen nicht aus Segmenten zusammengesetzt sind und welche nach einem Zentrifugierverfahren hergestellt werden. Die entsprechenden Formen sind jedoch nicht sehr haltbar, so daß man nur vergleichbare geringe Stückzahlen hiermit herstellen kann. Außerdem wird das Kunststoffmaterial bei diesem Herstellungsverfahren zweimal relativ hoch erhitzt und hierdurch entsprechend belastet. Demgegenüber hat die Segmentierung der Kabine den Vorteil, daß gegebenenfalls ein und dieselbe Form oder aber ein Teil einer Form nacheinander für mehrere Segmente einer Kabine verwendet werden kann. Hierdurch werden Kosten für Formen gespart, die im allgemeinen beträchtlich sind. Ein wesentliches Element der Erfindung liegt darin, daß die Kabine nicht nur aus mehreren einzelnen Segmenten besteht, sondern daß diese Segmente sehrschnell und einfach zusammengesetzt und auch wieder, zum Beispiel für einen Transport zu einem anderen Einsatzort, schnell demontiert werden können.

Ein weiterer Vorteil der Hohlblasteile liegt in ihrer Stabilität als doppelwandige Teile, so daß auf ein zusätzliches Stützgerüst oder einzelne Stützelemente, z. B. aus Metall, verzichtet werden kann.

Gemäß einer besonderen Ausgestaltung des erfindungsgemäßen Verfahrens wird die Tür der Kabine einstückig mit dem zugehörigen Wandsegment als Hohlblasteil hergestellt, wobei die Tür einen vom restlichen Wandsegment getrennten Hohlraum aufweist und über einen im allgemeinen massiven Steg mit dem restlichen Wandsegmenten zusammenhängt, wobei die Tür unter Bildung einer Türöffnung entlang des Steges von dem Segment abgetrennt wird. Hierdurch erspart man sich eine getrennte Herstellung der Tür, die so gleichzeitig in einer Form miteinem zugehörigen Wandsegment hergestellt wird. Außerdem vermeidet man gleichzeitig Abfall, der ansonsten beim Ausschneiden einer Türöffnung entstehen würde, oder eine zusätzliche Form für das Segment mit der Türöffnung. Das Türwandsegment kann auch als normales Wandsegment ohne Türöffnung verwendet werden. Hierdurch erspart man sich die Herstellung zusätzlicher Hohlblasformen.

Dabei wird eine Ausführungsform der Erfindung bevorzugt, bei welcher die Tür entlang eines vollständig umlaufenden Steges aus dem Wandsegment herausgetrennt, an einer Längskante mit mindestens einem Scharnierelement versehen und im wesentlichen um die Breite des Scharnierelementes versetzt mit Überlappung in die entstandende Türöffnung eingesetzt wird, wobei das Scharnierelement an der ihm zugewandten Kante der Türöffnung des Wandsegmentes befestigt wird.

Anstelle der aus mindestens zwei Wandteilen bestehenden Segmente mit einem festen Winkel zwischen den beiden Wandteilen können gemäß einer alternativen Ausführungsform der vorliegenden Erfindung auch einfache, nur aus einem Wandteil bestehende ebene Segmente verwendet werden, wenn auf deren Innenseite, zum Beispiel als Boden-oder Deckensegment ein Formteil angeordnet ist, welches ebenfalls den relativen Winkel der einzelnen Wandsegmente zueinander fest vorgibt und wobei die Segmente von außen durch ein Spannband zusammengehalten und gegen das innere Formteil gedrückt werden.

Erfindungsgemäß ist vorgesehen, daß mindestens ein Teil der Wandsegmente als Hohlblasteil hergestellt ist. Hohlblasteile haben die bereits erwähnten vorteilhaften Eigenschaften hinsichtlich ihrer Herstellbarkeit aber auch hinsichtlich der bei vergleichsweise geringem Gewicht erreichbaren Festigkeit, so daß die Kabine entsprechend stabil und dabei gleichzeitig leichtist, was wiederum den Transport erleichtert. Ein geeignetes Material zum Hohlblasen ist beispielsweise Polyethylen, daß auch bei Kälte eine gute Schlagfestigkeit besitzt.

Bevorzugt istdabei eine Ausführungsform der Erfindung, bei welcher ein Teil der Segmente auf der Innenseite die gleiche Grundform bzw. Grundrißform aufweist, wie auf der Außenseite.

Im Zusammenhang mit der Abwinkelung der Teile eines Wandsegmentes unter einem Winkel von weniger als 90° erreicht man so, daß die Wandsegmente platzsparend aufeinandergestapelt werden können, indem ein Wandsegment mit seiner Außenseite auf die Innenseite eines anderen Wandsegmentes gelegt wird, da diese Innenseite im wesentlichen die gleiche Grundform aufweist.

Generell wird eine Ausführungsform der Kabine bevorzugt, bei welcher die einzelnen Wandsegmente, aus welchen die Kabine zusammengesetzt ist, in dieser Weise stapelbar sind.

Demnach sollte auch höchstens ein Teil der Wandsegmente auf der Innenseite angeformte Zusatzelemente aufweisen, deren Wandungen von der sichtbaren Innenseite her einen Winkel von mindestens etwa 60° oder größer mit der Innenfläche des ersten und/oder zweiten Wandteiles einschließen. Durch das Anordnen von Zusatzelementen auf der Innenfläche eines Wandsegmentes wird zwar die Stapelbarkeit beeinträchtigt, da jedoch gleichzeitig diese Zusatzelemente nur auf einen Teil, und vorzugsweise nur auf ein einziges Wandsegment beschränkt sind, können zunächst alle anderen Wandsegmente aufeinandergestapelt und zuletzt das Wandsegment mit auf der Innenseite angeformten Zusatzelementen auf diesen Stapel aufgelegt werden. Um dabei gleichzeitig die Herstellung als Hohlblasteil zu gewährleisten, dürfen die Wandungen der Zusatzelemente mit der Innenfläche des ersten und/oder zweiten Wandteiles keine zu kleinen Winkel einschließen, da sonst die Entformbarkeit derartiger Teile nicht gewährleistet ist. Im allgemein werden beim Hohlblasen zwei Formteile unter Bildung eines oder mehrerer dazwischen befindlicher Hohlräume aneinandergelegt. Damit nach dem Ausblasen der so gebildeten Hohlräume ein Abnehmen der Formen ohne Zerstörung oder Beschädigung des hergestellten Hohlblasteiles möglich ist, dürfen die beiden Formhälften keine in Entformungsrichtung, das heißt in der Richtung, in welcher die Formen auseinandergezogen werden, hinterschnittenen Vorsprüngehaben. Durch die vorgenannte Mindestbedingung bezüglich der Winkel zwischen den Wandungen der Zusatzelemente und den Wandteilen des Segmentes lassen sich derartig hinterschnittene Formen vermeiden, wobei in Einzelfällen die Winkel je nach Entformungsrichtung auch kleiner sein können. Anders ausgedrückt müssen die Zusatzelemente bzw. deren Wandungen so geformt sein, daß es mindestens eine Blickrichtung (die dann auch der Entformungsrichtung entspricht) gibt, aus welcher keine der Wandungen der Zusatzelemente hinterschnitten erscheint. Aus dieser Blickrichtung sind also alle Wandungen der Zusatzelemente und zusätzlich die Innenseiten der Wandteile des Wandsegmentes sichtbar oder verlaufen höchstens parallel zur Blickrichtung. Bei Verwendung eines mehr oder weniger elastischen Materials sind jedoch kleinere Hinterschneidungen tolerierbar, da die entsprechenden Wandungen beim Entformen elastischen nachgeben.

Um einerseits diese Entformbarkeit zu gewährleisten und um gleichzeitig auch die Zahl der notwendigen Wandsegmente reduzieren zu können, hat jedes Wandsegment zwei an gegenüberliegenden Kanten des ersten Wandteiles angesetzte zweite Wandteile und bei gegebenenfalls an der Innenseite des Wandsegmentes angeformten Zusatzelementen beträgt der eingeschlossene Winkel zwischen den Wandungen dieser Zusatzelemente und den ersten und/oder zweiten Wandteilen mindestens etwa 90°.

Weiterhin ist eine Ausführungsform der Erfindung bevorzugt, bei welcher die zusammengesetzten Wandsegmente durch mindestens ein umlaufendes Spannband zusammengehalten werden. Wie bereits erwähnt, ermöglicht ein Zusammenhalt mit einem solchen Spannband eine sehr schnelle Montage und Demontage der Kabine und gewährleistet gleichzeitig einen festen Zusammenhalt der Wandsegmente, wobei die Montage und Demontage gänzlich ohne Werkzeug erfolgen kann.

Bei der bevorzugten, drei Wandsegmente aufweisenden Kabine ist weiterhin vorgesehen, daß zwei Wandsegmente im wesentlichen parallele Innen- und Außenflächen aufweisen,wobei eines dieser Segmente mit einer Türöffnung versehen ist, während das dritte Wandsegment im wesentlichen die gleiche Außenform hat, jedoch an der Innenseite angeformte Zusatzelemente aufweist. Diese Ausführungsform ermöglicht die bereits angesprochene platzsparende Stapelbarkeit der einzelnen Segmente. Gemäß einer Ausführungsform, bei welcher die Kabine als Toilette Verwendung finden soll, ist erfindungsgemäß vorgesehen, daß als Zusatzelement ein Toilettenbecken und/oder mindestens ein Wassertank und/oder ein Waschbecken und/oder ein Urinal angeformt sind.

Außerdem hat in der bevorzugten Ausführungsform die Kabine zusätzlich zu den Wandsegmenten mindestens ein Bodensegment und/oder ein Deckensegment.

In vorteilhafter Weise ist dabei das Bodensegment sechseckig, wobei seine Außenmaße dem Innenmaß der zusammengesetzten Wandsegmente entsprechen und wobei am umlaufenden Rand des Bodensegmentes in Vertiefungen der Wandsegmente eingreifende Vorsprünge vorgesehen sind. Das Bodensegment ist dann durch diese Vorsprünge fest mit den Wandsegmenten verbunden, so daß die Kabine als Ganzes angehoben werden kann, ohne das das Bodensegment herausfällt.

Ein solches Bodensegment entspricht dem oben Erwähnten und in Anspruch 6 definierten Formteil, an welches die Wandsegmente durch ein umlaufendes Spannband angedrückt werden.

Auch das Bodensegment wird vorzugsweise als Hohlblasteil hergestellt und weist für die Verwendung der Kabine als Toilette einen als Fäkalientank ausgebildeten Hohlraum auf.

Die im wesentlichen ebene Ausbildung der Wände schließt nicht aus, daß sie zur Erhöhung ihrer Stabilität profiliert sind, weshalb eine solche Ausführungsform vorzuziehen ist. Bei der Verwendung eines Dachsegmentes kann dieses in vorteilhafter Weise einen Schnapprand oder Klammern aufweisen,welche einen oberen Rand der Wandsegmente federnd hintergreifen. Das Dachsegment hält so die Wandsegmente fest zusammen und ist andererseits auch an den Wandsegmenten sicher befestigt, so daß es auch durch stärkeren Wind oder Sturm nicht von den Wandsegmenten abgerissen werden kann. Der Schnapprand muß nicht vollständig umlaufend sein, sondern es können auch einzelne elastische Schnapphaken oder Spannhaken vorgesehen sein, mit welchen das Dachsegment in einfacher und schneller Weise mit den Wandsegmenten verbindbar ist. Außerdem ist das Dachsegment vorzugsweise mit Lüftungsschlitzen und/oder Fenstereinsätzen versehen.

Auch die Tür der Kabine ist in der bevorzugten Ausführungsform als Hohlblasteil hergestellt, welches an einer Kante mit einem Scharnierelement versehen ist und mit seiner gegenüberliegenden Kante den Rand einer Türöffnung überlappt. Für die Herstellung der Türergeben sich dabei die gleichen Vorteile wie für die Herstellung der einzelnen Wandsegmente. Zweckmäßigerweise weist der Scharnierrand der Tür eine parallel zur Türkante hinterschnittene Profilschiene auf, welche in ein passendes Hohlprofil mindestens eines Scharnierelementes einschiebbar ist. Auch diese Maßnahme trägt zur Vereinfachung des Herstellungsprozesses bei. Zweckmäßig ist es außerdem, wenn an der Tür und am zugehörigen Wandsegment ein Federelement vorgesehen ist, welches die Tür in Schließstellung vorspannt. Um das Anbringen der Tür an der Kabine bzw. an der entsprechenden Türöffnung zu erleichtern, ist erfindungsgemäß vorgesehen, daß im Bodensegment und/oder im Deckensegment Aussparungen zur Aufnahme von Scharnierzapfen vorgesehen sind. Auf diese Weise kann man sich die Befestigung zusätzlicher Scharnierelemente am Rand der Türöffnung ersparen.

Die Erfindung wird im folgenden anhand einer bevorzugten Ausführungsform und der dazugehörigen Figuren mit ihren Vorteilen, Merkmalen und Anwendungsmöglichkeiten beschrieben.
Es zeigen:
- Figur 1: die fünf Segmente, aus denen eine Kabine besteht, wobei die drei Wandsegmente in Stapelstellung hintereinander angeordnet sind,
- Figur 2: eine teilweise aus einem Bodensegment und zwei Wandsegmenten zusammengesetzte Kabine,
- Figur 3: eine vollständig zusammengesetzte Kabine in einer Außenansicht und
- Figur 4: schematisch den Aufbau des Türsegmentes unmittelbar nach der Herstellung als Hohlblasteil und im fertig montierten Zustand mit Scharnier.

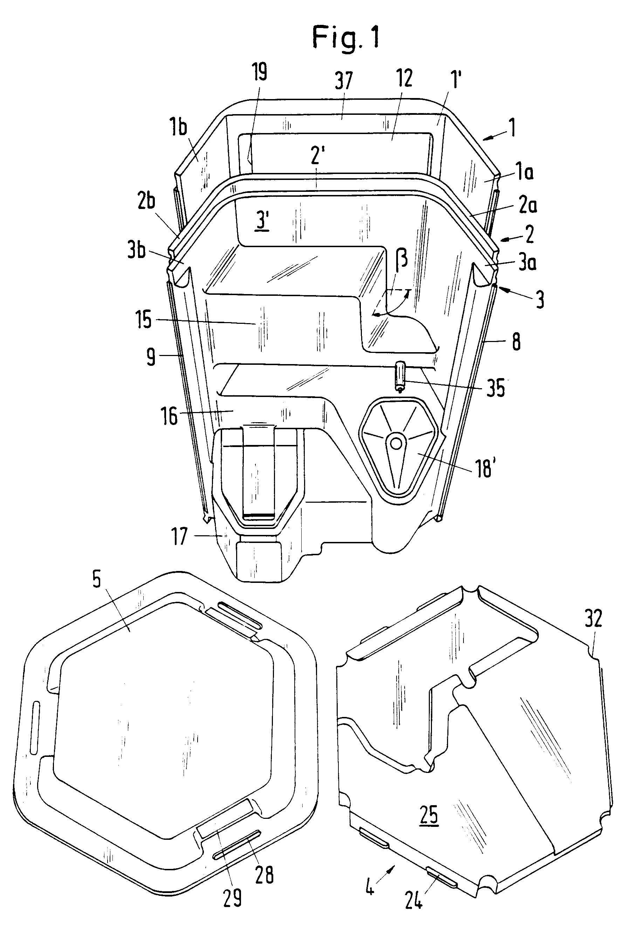

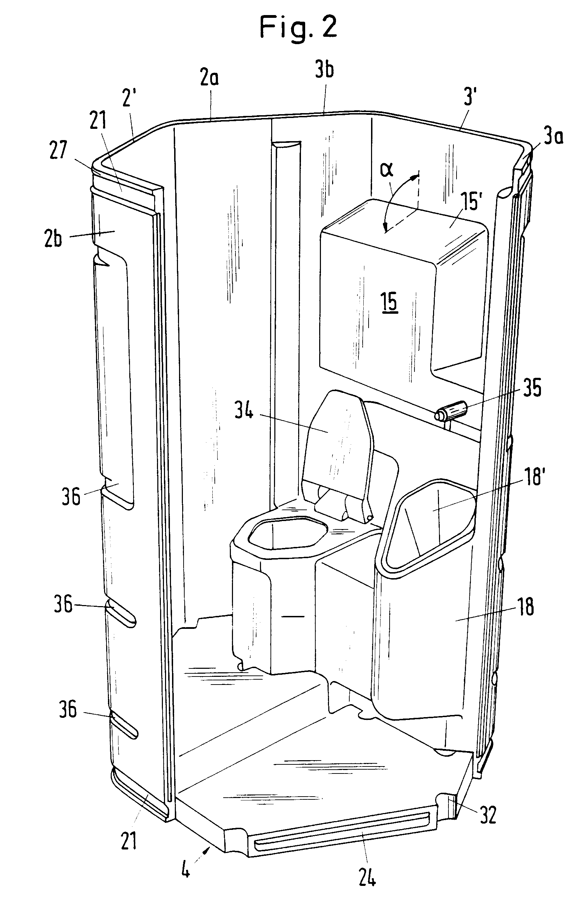

In Figur 1 erkennt man drei hintereinander angeordnete Wandsegmente 1, 2 und 3 sowie ein Deckensegment 5 und ein Bodensegment 4. Die einzelnen Wandsegmente 1, 2, 3 bestehen jeweils aus einem zumindest auf seiner Außenseite im wesentlichen ebenen, geraden ersten Wandteil 1', 2' bzw. 3' und aus zwei untereinem Winkel von etwa 60° beidseitig an dem ersten Wandteil ansetzenden zweiten Wandteilen 1a, 1b; 2a, 2b bzw. 3a, 3b. Das Wandteil 1' des Segmentes 1 weist eine Türöffnung 12 auf. Im übrigen verläuft jedoch die Innenwand des Wandsegmentes 1 im wesentlichen (abgesehen von Profilierungen) ebenso wie die Innenwand des Wandsegmentes 2 parallel zur jeweiligen Außenwand des Wandsegmentes 1 bzw. 2. Dagegen weist das Wandsegment 3 auf seiner Innenseite verschiedene, einstückig angeformte Zusatzelemente auf, die im einzelnen ein Wassertank 15, ein weiterer Wassertank 16, ein Toilettenbecken 17 und ein Kombinationsbehälter 18 sind. Zusätzlich angebrachte Teile sind der in Figur 2 deutlicher erkennbarer Toilettendeckel 34 , der Wasserhahn 35 und der Urinaleinsatz 18', der wahlweise auch durch einen Waschbeckeneinsatz ersetzt werden kann.

Wie man erkennt, schließendie Wandungen,zum Beispiel die Wandung 15', der Zusatzelemente mit den Innenwänden des Wandsegmentes 3 Winkel α und β ein, die mindestens 90° betragen. Auch untereinander stoßen die Wandungen der Zusatzelemente unter Winkeln von mindestens 90° aneinander, so daß eine leichte Entformbarkeit gewährleistet ist. Dort wo dennoch Vertiefungen notwendig sind, wie zum Beispiel bei dem Urinal 18', werden einfach Öffnungen in dem Zusatzteil freigelassen oder ausgeschnitten, in welchen dann entsprechende Einsätze eingefügt werden können. Ähnliches gilt für das Toilettenbecken 17.

Die zweiten Wandteile 1a, b; 2a, b und 3a, b werden über Nut-Federverbindungen zusammengesteckt, wobei die hier mit a gekennzeichneten zweiten Wandteile die Feder 8 aufweisen, während die mit b gekennzeichneten zweiten Wandteile eine entsprechende Nut 9 aufweisen.

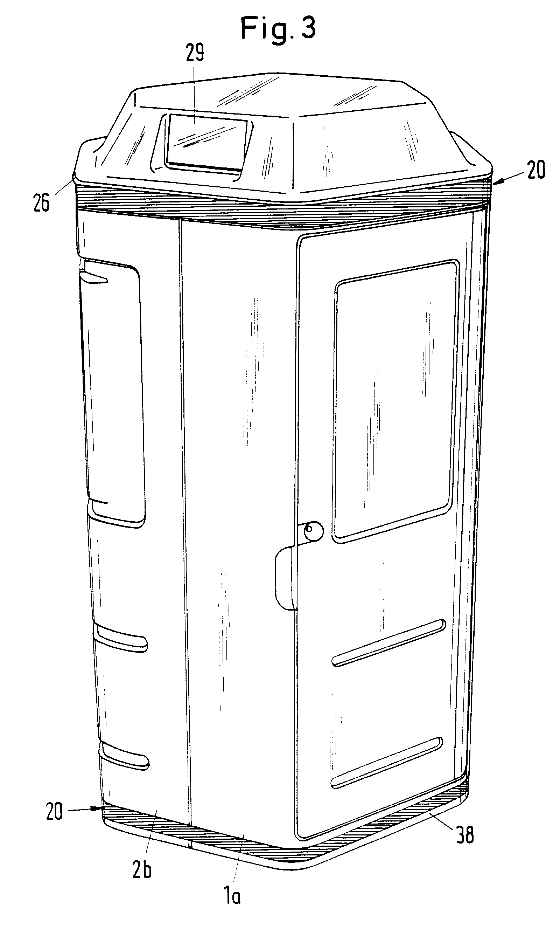

In Figur 2 erkennt man weitere zusätzliche Merkmale der Kabine, wie zum Beispiel die Vertiefungen 21 jeweils am oberen und unteren Rand der Wandsegmente 1, 2 und 3, die insgesamt bei der zusammengesetzten Kabine eine horizontal umlaufende Nut bzw. Vertiefung zur Aufnahme eines Spannbandes 20 bilden, wie in Figur 3 dargestellt. Außerdem erkennt man an der Außenwand der Wandsegmente 2 und 3 Profilierungen 36, welche zur Erhöhung der Stabilität dienen und auch hinsichtlich des Designs gestälterische Möglichkeiten bieten.

Der umlaufende Rand des Bodensegmentes 4 weistteilweise in Figur 1 und teilweise in Figur 2 dargestellte Vorsprünge 24 auf. Wobei der Vorsprung 24, der in Figur 2 dargestellt ist, in eine entsprechende Vertiefung am unteren Rand eines ersten Wandteiles, in diesem Fall des Wandteiles 1' eingreifen kann, während die kürzeren Vorsprünge 24,von denen jeweils zwei am Rand des Bodensegmentes 4 in Figur 1 dargestellt sind, jeweils in eine entsprechende Vertiefung der kürzeren zweiten Wandteile einreifen können.

Das Bodensegment ist darüber hinaus im Bereich des Toilettenbeckens 17 erhöht und weist unter dieser Erhöhung einen Fäkalientank 25 auf.
In Figur 3 erkennt man eine vollständig zusammengesetzte Kabine von außen, wobei das Deckelsegment 5 mit seinem äußeren Schnapprand 26 den in Figur 2 erkennbaren oberen Rand 27 der Wandsegmente hintergreift. In der Vertiefung 21 darunter ist ein Spannband 20 angeordnet, ebenso wie in der unteren Vertiefung 21. Das Spannband kann vernietet oder gecrimpt oder aber auch lösbar gespannt sein. Ein besonderer Vorteil dieser Spanntechnik in Verbindung mit den besonderen Wandsegmenten liegt darin, daß die aneinandergesetzten Wandsegmente derart aneinander stoßen, daß jeweils zwei zweite Wandteile, zum Beispiel 1a, 2b; 2a, 3b und 3a, 1b miteinander fluchten. Beim Festziehen des Spannbandes wird diese Verbindung dann ohne jedes Drehmoment bezüglich der Nut-Federverbindung ausschließlich auf Druck belastet. Ein Verkippen der aneinandergesetzten zweiten Wandteile um die durch die Nut-Federverbindung definierte Achse ist also ausgeschlossen. Dort, wo Wandteile unter einem Winkel von 60° zueinander stehen, sind wiederum die Teile einstückig miteinander ausgebildet, so daß auch hier nicht die Gefahr besteht, daß eine Verwindung oder Verformung der Kabine unter der Zugkraft des Spannbandes 20 auftreten könnte. In vorteilhafter Weise ist außerdem das Bodensegment 4 in seinem Grundriß dem Innenmaß der zusammengesetzten Wandsegmente angepaßt, so daß unterdem Zug des unteren Spannbandes 20 ein äußerst stabiler Zusammenhalt aller Segmente gewährleistet ist. Auch das Deckelsegment 5 kann auf seiner Unterseite eine den Innenmaßen der Wandsegmente 1, 2, 3 entsprechende Randleiste aufweisen, gegen die sich die Wandsegmente mit ihrer oberen Innenfläche unter dem Zug des Spannbandes 20 anlegen können.

In Figur 3 erkennt man deutlich Fenstereinsätze 29 im Deckelsegment 5, während die Lüftungsschlitze 28 des Deckelsegmentes 5 in Figur 1 besser zu erkennen sind.

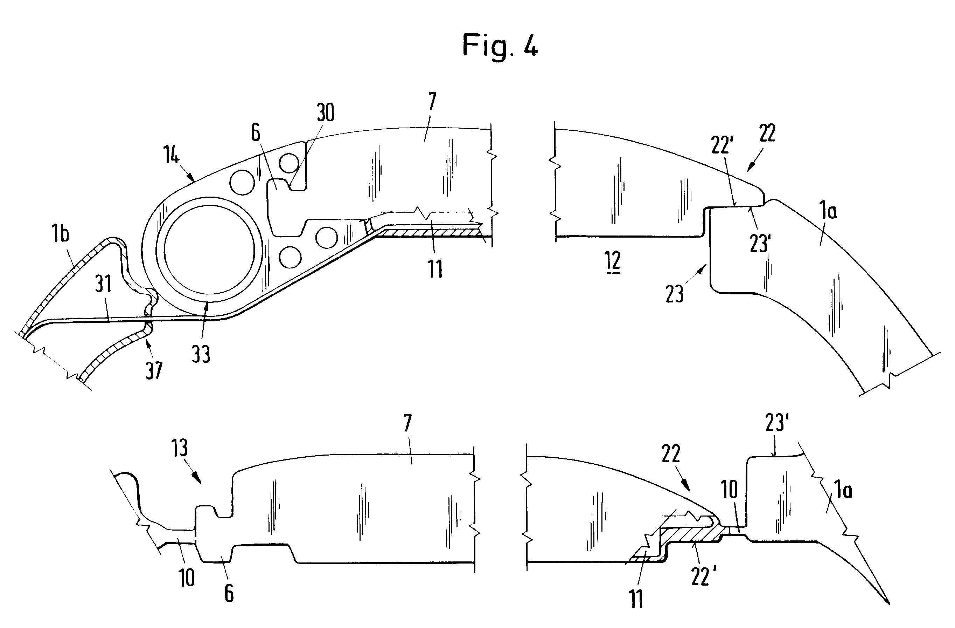

Figur 4 stellt im unteren Teilbild ausschnittweise und unterbrochen das Wandsegment 1 mit der einstückig damit ausgebildeten Tür 7 dar. Die Tür 7 hat einen eigenen, separaten Hohlraum 11 und ist über massive, nicht hohle Stege 10 mit den Rändern 23 und 19 des Wandsegmentes 1 bzw. des Wandteiles 1' verbunden, welche nach dem Abtrennen der Tür 7 zwei gegenüberliegende Innenkanten einer Türöffnung 12 bilden.

Der Hohlraum 11 der Tür 7 ist durch die teilweise weggebrochen dargestellte Oberseite der Tür 7 erkennbar.

Wie man durch Vergleich der Konturen im unteren und oberen Teilbild der Figur 4 erkennen kann, wird die Tür 7 unmittelbar an ihrer Vorderkante 22 und unmittelbar hinter der hinteren Profilschiene 6 von den Stegen 10 abgetrennt, wobei auch die Stege 10 anschließend von den gegenüberliegenden Kanten 23 bzw. 19 der Türöffnung 12 entfernt werden. Dann wird ein Scharnierelement 14, welches eindem Profil des Profilstranges bzw. der Profilschiene 6 entsprechendes Hohlprofil 30 aufweist, von oben oder unten auf die Profilschiene 6 aufgeschoben. Das Scharnierelement kann entweder über die ganze Länge der Profilschiene 6 durchgehend sein oder es können zwei oder mehrere kurze Scharnierelemente 14 von oben oder unten auf die Profilschiene 6 aufgeschoben werden. Anschließend wird die Tür 7 mit dem Scharnierelement 14 so in die Türöffnung 12 eingesetzt, daß das Scharnierelement 14 sich in der Türöffnung unmittelbar vor der Kante 19 der Türöffnung 12 befindet. Das Scharnierelement kann entweder an der Innenkante 19 der Türöffnung befestigt werden, hat jedoch in der bevorzugten Ausführungsform jeweils einen oberen und einen unteren Scharnierzapfen 33, der auch durchgehend sein kann, wobei der untere Scharnierzapfen in eine Aussparung 32 am Bodensegment 4, die am besten in Figur 2 erkennbar ist, und eine gegenüberliegende, nicht dargestellte Aussparung im unteren Querbalken 38 der Türöffnung 12 eingreift. Der obere Scharnierzapfen 33 greift in eine entsprechende Zapfenöffnung im oberen Querträger 37 der Türöffnung 12 ein. Auch das Deckenelement 5 kann gegebenenfalls eine der Aussparung 32 des Bodensegmentes 4 entsprechende Aussparung haben. Ein mit dem Wandteil 1 bzw. mit dem unmittelbar anschließenden Wandteil 1b verbundenes Federelement 31, welches mit einem zweiten Ende an der Tür 7 angreift, spannt die Tür in die geschlossene Stellung vor. Durch die Anordnung des Scharnierelementes 14, welches eine größere Breite hat als der zuvor zwischen Profilschiene 6 und Kante 19 der Türöffnung 12 verlaufende Steg 10, ist die Tür in Richtung zum Türrand 23 derart versetzt, daß ihr Rand 22 mit dem Rand 23 überlappt, so daß die Anschlagfläche 22' der Türkante 22 an die Anschlagfläche 23' des Randes 23 anschlägt.

Wie man in den Figuren sieht, ist die aus Kunststoff hergestellte Kabine an den Ecken abgerundet und weist, wie man insbesondere aus Figur 3 sieht, ein sehransprechendes Äußeres auf. Dieses ansprechende Äußere ist verknüpft mit einem Höchstmaß an Funktionalität; die Kabine ist sehr leicht zusammensetzbar und auch sehr schnell wieder demontierbar, die einzelnen Wandsegmente können, wie in Figur 1 dargestellt, aufeinandergestapelt werden, so daß der Transport derartiger Kabinen damit erheblich vereinfacht wird, und die durch Spannbänder zusammengehaltene Kabine ist insgesamt äußerst stabil und widerstandsfähig.

## Patentansprüche

1. Kabine, bestehend aus mehreren Wandsegmenten (1,2,3) und gegebenenfalls mindestens einem Decken- (5) und/oder einem Bodensegment (4), welche zu einer im wesentlichen geschlossenen Kabine zusammensetzbar sind, **dadurch gekennzeichnet,** daß auf der Innenseite der Wandsegmente (1, 2, 3) ein Formteil (4) angeordnet ist und daß die einzelnen Wandsegmente durch ein außen umlaufendes Spannband (20) zusammengehalten werden.

2. Kabine nach Anspruch 1, **dadurch gekennzeichnet,** daß als Formteil ein Boden- (4) und/oder ein Deckensegment (5) vorgesehen ist.

3. Kabine nach Anspruch 1 oder 2, **dadurch gekennzeichnet,** daß das Spannband die Wandsegmente gegen das Formteil drückt.

4. Kabine nach einem der Ansprüche 1 bis 3, **dadurch gekennzeichnet,** daß mindestens ein Teil der Wandsegmente (1,2,3) aus einem zumindest an seiner Außenseite im Grundriß im wesentlichen geraden Wandteil (1',2',3') und mindestens einem unter einem Winkel von höchstens 90° hierzu abgewinkelten und mit dem ersten Wandteil (1', 2', 3') fest verbundenen zweiten Wandteil (1a, 1b; 2a, 2b; 3a, 3b) besteht.

5. Kabine nach einem der Ansprüche 1 bis 4, **dadurch gekennzeichnet,** daß mindestens ein Teil der Wandsegmente (1,2, 3) als Hohlblasteil hergestellt ist.

6. Kabine nach einem der Ansprüche 1 bis 5, **dadurch gekennzeichnet,** daß ein Teil (1,2) der Wandsegmente entlang der Innenseite im wesentlichen den gleichen Grundriß aufweist wie entlang der Außenseite.

7. Kabine nach einem der Ansprüche 1 bis 6, **dadurch gekennzeichnet,** daß die Wandsegmente derart stapelbar sind, daß die Außenseite eines Wandsegmentes im wesentlichen passend auf die Innenseite eines anderen Wandsegmentes auflegbar ist.

8. Kabine nach einem der Ansprüche 1 bis 7, **dadurch gekennzeichnet,** daß höchstens ein Teil (3) der Wandsegmente (1,2,3) auf der Innenseite angeformte Zusatzelemente (15,16, 17,18) aufweist, deren Wandungen (15') von der sichtbaren Innenseite her einen Winkel (α, β) von mindestens etwa 60° oder größer mit der Innenfläche des ersten und/oder zweiten Teiles einschließen.

9. Kabine nach einem der Ansprüche 1 bis 8, **dadurch gekennzeichnet,** daß das Wandsegment (1,2,3) zwei an gegenüberliegenden Kanten des ersten Wandteiles (1',2',3') angesetzte zweite Wandteile (1a, b; 2a, b; 3a, b) aufweist und daß bei gegebenenfalls an der Innenseite des Wandsegmentes angeformten Zusatzelementen (15,16,17,18) dereingeschlossene Winkel zwischen den Wandungen (15') dieser Zusatzelemente und den ersten und/oder zweiten Wandteilen mindestens etwa 90° beträgt.

10. Kabine nach einem der Ansprüche 1 bis 9, **dadurch gekennzeichnet,** daß sie drei Wandsegmente aufweist, die aus je einem an der Außenseite im wesentlichen ebenen ersten Wandteil (1', 2', 3') sowie zwei unter 60° hierzu abgewinkelten zweiten Wandteilen (1a, b; 2a, b; 3a, b) besteht, welche je etwa die halbe Breite des ersten Wandteiles (1', 2', 3') aufweisen.

11. Kabine nach Anspruch 10, **dadurch gekennzeichnet,** daß die Wandsegmente (1,2,3) unter Bildung einer Kabine mit dem Grundriß eines regelmäßigen Sechsecks mit ihren zweiten Seitenteilen (1a, b; 2a, b; 3a, b) aneinandergesetzt sind.

12. Kabine nach einem der Ansprüche 1 bis 11**, dadurch gekennzeichnet,** daß die Wandteile verschiedener Segmente (1,2,3) in einer Nut-Federverbindung (8,9) aneinander stoßen.

13. Kabine nach einem der Ansprüche 1 bis 12, **dadurch gekennzeichnet,** daß die Wandsegmente (1,2,3) nahe an ihrem oberen und/oder an ihrem unteren Rand je eine im wesentlichen horiz8ontal verlaufende Vertiefung (21) zur Aufnahme je eines Spannbandes (20) aufweisen.

14. Kabine nach Anspruch 10 oder einem der auf Anspruch 10 rückbezogenen Ansprüche, **dadurch gekennzeichnet,** daß zwei Wandsegmente im wesentlichen parallele Innen- und Außenflächen aufweisen, wobei eines dieser Segmente (1) mit einer Türöffnung (12) versehen ist, während das dritte Wandsegment (3) im wesentlichen die gleiche Außenform hat, jedoch an der Innenseite angeformte Zusatzelemente (15, 16,17, 18) aufweist.

15. Kabine nach Anspruch 8 oder 14 oder einem der auf Anspruch 8 oder 14 rückbezogenen Ansprüche, **dadurch gekennzeichnet,** daß als Zusatzelement ein Toilettenbecken (17) und/oder mindestens ein Wassertank (15,16) und/oder ein Kombinationstank (18) für ein Waschbecken (18) und/oder ein Urinal (18') vorgesehen sind.

16. Kabine nach einem der Ansprüche 1 bis 15, **dadurch gekennzeichnet,** daß zusätzlich zu den Wandsegmenten (1,2,3) mindestens ein Bodensegment(4) und/oder ein Deckensegment (5) vorgesehen sind.

17. Kabine nach Anspruch 16, **dadurch gekennzeichnet,** daß das Bodensegment sechseckig ist und dem Innenmaß entsprechend zusammengesetzter Wandsegmente (1, 2, 3) entspricht, wobei am umlaufenden Rand des Bodensegmentes (4) in Vertiefungen der Wandsegmente eingreifende Vorsprünge (24) vorgesehen sind.

18. Kabine nachAnspruch 16 oder 17, **dadurch gekennzeichnet,** daß das Bodensegment als Hohlblasteil hergestellt ist und einen als Fäkalientank (25) ausgebildeten Hohlraum aufweist.

19. Kabine nach einem der Ansprüche 1 bis 18, **dadurch gekennzeichnet,** daß die Wände profiliert sind.

20. Kabine nach einem der Ansprüche 1 bis 19, **dadurch gekennzeichnet,** daß sie ein Dachsegment (5) mit Klammern oder einem Schnapprand (26) aufweist, welche einen oberen Rand (27) der Wandsegmente (1,2,3) federnd hintergreifen.

21. Kabine nach Anspruch 20, **dadurch gekennzeichnet,** daß das Dachsegment (5) Lüftungsschlitze (28) und/oder Fenstereinsätze (29) aufweist.

22. Kabinenach einem der Ansprüche 1 bis 21, **dadurch gekennzeichnet,** daß die Tür (7) aus einem Hohlblasteil hergestelltist, welches an einer Kante miteinem Scharnierelement (14) versehen ist und mit seiner gegenüberliegenden Kante (22) den Rand (23) einer Türöffnung (12) überlappt.

23. Kabine nach Anspruch 22, **dadurch gekennzeichnet,** daß der Scharnierrand der Tür eine parallel zur Türkante hinterschnittene Profilschiene (6) aufweist, welche in ein passendes Hohlprofil (30) mindestens eines Scharnierelementes (14) einschiebbar ist.

24. Kabine nach Anspruch 22 oder 23, **dadurch gekennzeichnet,** daß an der Tür (7) und am zugehörigen Wandsegment (1) ein Federelement (31) vorgesehen ist, welches die Tür (7) in Schließstellung vorspannt.

25. Kabine nach einem der Ansprüche 22 bis 24, **dadurch gekennzeichnet,** daß im Bodensegment (4) und im oberen Querträger (37) der Türöffnung (12) und/oder im Deckensegment (5) Aussparungen (32) zur Aufnahme von Scharnierzapfen (33) vorgesehen sind.

## Geänderte Patentansprüche

### Geänderte Patentansprüche gemäss Regel 86(2) EPÜ.

1. Kabine, bestehend aus mehreren Wandsegmenten (1, 2, 3) und gegebenenfalls mindestens einem Decken- (5) und einem Bodensegment (4), welche zu einer im wesentlichen geschlossenen Kabine zusammensetzbar sind, wobei mindestens ein Teil der Wandsegmente (1,2,3) aus einem zumindest an seiner Außenseite im Grundriß im wesentlichen geraden Wandteil (1', 2', 3') und mindestens einem unter einem Winkel von höchstens 90° hierzu abgewinkelten und mit dem ersten Wandteil (1', 2', 3') fest verbundenen zweiten Wandteil (1a,1b;2a,2b;3a,3b) besteht, **dadurch gekennzeichnet,** daß die Kabine drei Wandsegmente aufweist, die aus je einem an der Außenseite im wesentlichen ebenen ersten Wandteil (1',2',3') sowie zwei unter 60° hierzu abgewinkelten zweiten Wandteilen (1a, b; 2a, b; 3a, b) besteht, welche je etwa die halbe Breite des ersten Wandteiles (1', 2', 3') aufweisen, und daß die Wandsegmente (1, 2, 3) unter Bildung einer Kabine mitdem Grundriß eines regelmäßigen Sechsecks mit ihren zweiten Seitenteilen (1a, b; 2a, b; 3a, b) aneinandergesetzt sind.

2. Kabine nach Anspruch 1, **dadurch gekennzeichnet,** daß die zusammengesetzten Wandsegmente (1, 2, 3) durch mindestens ein umlaufendes Spannband (20) zusammengehalten werden.

3. Kabine nach Anspruch 2, **dadurch gekennzeichnet,** daß als Formteil ein Boden- (4) und/oder ein Deckensegment (5) vorgesehen ist.

4. Kabine nach einem der Ansprüche 1 bis 3, **dadurch gekennzeichnet,** daß mindestens ein Teil der Wandsegmente (1,2,3) als Hohlblasteil hergestellt ist.

5. Kabine nach einem der Ansprüche 1 bis 4, **dadurch gekennzeichnet,** daß ein Teil (1,2) der Wandsegmente entlang der Innenseite im wesentlichen den gleichen Grundriß aufweist wie entlang der Außenseite.

6. Kabine nach einem der Ansprüche 1 bis 5, **dadurch gekennzeichnet,** daß die Wandsegmente derart stapelbar sind, daß die Außenseite eines Wandsegmentes im wesentlichen passend auf die Innenseite eines anderen Wandsegmentes auflegbar ist.

7. Kabine nach einem der Ansprüche 1 bis 6, **dadurch gekennzeichnet,** daß höchstens ein Teil (3) der Wandsegmente (1, 2, 3) auf der Innenseite angeformte Zusatzelemente (15, 16,17,18) aufweist, deren Wandungen (15') von der sichtbaren Innenseite her einen Winkel (α, β) von mindestens etwa 60° oder größer mit der Innenfläche des ersten und/oder zweiten Teiles einschließen.

8. Kabine nach einem der Ansprüche 1 bis 7, **dadurch gekennzeichnet,** daß bei gegebenenfalls an der Innenseite des Wandsegmentes angeformten Zusatzelementen (15, 16, 17, 18) der eingeschlossene Winkel zwischen den Wandungen (15') dieser Zusatzelemente und den ersten und/oder zweiten Wandteilen mindestens etwa 90° beträgt.

9. Kabine nach einem der Ansprüche 1 bis 8, **dadurch gekennzeichnet,** daß auf der Innenseite der Wandsegmente ein Formteil angeordnet ist, gegen welches die einzelnen Wandsegmente durch ein außen umlaufendes Spannband gedrückt werden.

10. Kabine nach einem der Ansprüche 1 bis 9, **dadurch gekennzeichnet,** daß die Wandteile verschiedener Segmente (1,2,3) in einer Nut-Federverbindung (8, 9) aneinander stoßen.

11. Kabine nach einem der Ansprüche 1 bis 10, **dadurch gekennzeichnet,** daß die Wandsegmente (1,2,3) nahe an ihrem oberen und/oder an ihrem unteren Rand je eine im wesentlichen horiz8ontal verlaufende Vertiefung (21) zur Aufnahme je eines Spannbandes (20) aufweisen.

12. Kabine nach einem der Ansprüche 1 bis 11, **dadurch gekennzeichnet,** daß zwei Wandsegmente im wesentlichen parallele Innen- und Außenflächen aufweisen, wobei eines dieser Segmente (1) mit einer Türöffnung (12) versehen ist, während das dritte Wandsegment (3) im wesentlichen die gleiche Außenform hat, jedoch an der Innenseite angeformte Zusatzelemente (15, 16, 17, 18) aufweist.

13. Kabine nach Anspruch 7 oder einem der auf Anspruch 7 rückbezogenen Ansprüche, **dadurch gekennzeichnet,** daß als Zusatzelement ein Toilettenbecken (17) und/oder mindestens ein Wassertank (15, 16) und/oder ein Kombinationstank (18) für ein Waschbecken (18) und/oder ein Urinal (18') vorgesehen sind.

14. Kabine nach einem der Ansprüche 1 bis 13, **dadurch gekennzeichnet,** daß zusätzlich zu den Wandsegmenten (1, 2, 3) mindestens ein Bodensegment (4) und/oder ein Deckensegment (5) vorgesehen sind.

15. Kabine nach Anspruch 14, **dadurch gekennzeichnet,** daß das Bodensegment sechseckig ist und dem Innenmaß entsprechend zusammengesetzter Wandsegmente (1, 2, 3) entspricht, wobei am umlaufenden Rand des Bodensegmentes (4) in Vertiefungen der Wandsegmente eingreifende Vorsprünge (24) vorgesehen sind.

16. Kabine nach Anspruch 14 oder 15, **dadurch gekennzeichnet,** daß das Bodensegment als Hohlblasteil hergestellt ist und einen als Fäkalientank (25) ausgebildeten Hohlraum aufweist.

17. Kabine nach einem der Ansprüche 1 bis 16, **dadurch gekennzeichnet,** daß die Wände profiliert sind.

18. Kabine nach einem der Ansprüche 1 bis 17, **dadurch gekennzeichnet,** daß sie ein Dachsegment (5) mit Klammern oder einem Schnapprand (26) aufweist, welche einen oberen Rand (27) der Wandsegmente (1,2,3) federnd hintergreifen.

19. Kabine nach Anspruch 18, **dadurch gekennzeichnet,** daß das Dachsegment (5) Lüftungsschlitze (28) und/oder Fenstereinsätze (29) aufweist.

20. Kabine nach einem der Ansprüche 1 bis 19, **dadurch gekennzeichnet,** daß eine Tür (7) auseinem Hohlblasteil hergestellt ist, welches an einer Kante mit einem Scharnierelement (14) versehen ist und mit seiner gegenüberliegenden Kante (22) den Rand (23) der Türöffnung (12) eines Wandteiles (1', 2', 3') überlappt.

21. Kabine nach Anspruch 20, **dadurch gekennzeichnet,** daß der Scharnierrand der Tür eine parallel zur Türkante hinterschnittene Profilschiene (6) aufweist, welche in ein passendes Hohlprofil (30) mindestens eines Scharnierelementes (14) einschiebbar ist.

22. Kabine nach Anspruch 20 oder 21, **dadurch gekennzeichnet,** daß an der Tür (7) und am zugehörigen Wandsegment (1) ein Federelement (31) vorgesehen ist, welches die Tür (7) in Schließstellung vorspannt.

23. Kabine nach einem der Ansprüche 20 bis 22, **dadurch gekennzeichnet,** daß im Bodensegment (4) und im oberen Querträger (37) der Türöffnung (12) und/oder im Deckensegment (5) Aussparungen (32) zur Aufnahme von Scharnierzapfen (33) vorgesehen sind.
